# EUROPEAN PATENT APPLICATION

(11) **EP 1 048 593 A2**
(43) Date of publication of application: **02.11.2000**
(21) Application number: 00303390.9
(22) Date of filing: 20.04.2000
(51) Int. Cl.: B65G 17/32

(54) **Roller conveyor chain**

(30) Priority: 21.04.1999 US 295559
(71) Applicant: AMSTED Industries Incorporated, Chicago, Illinois 60601 (US)
(72) Inventor: Roberts, Cyrus J., Indianapolis, IN 46220 (US); Ormiston, Malcolm D., Tyne & Wear, NE40 4XD (GB)
(74) Representative: Davies, Christopher Robert

(57) **Abstract**

A chain conveyor is disclosed. It has a base chain with plural article conveying assemblies mounted on the base chain. The base chain has standard components, including roller link plates (22), bushings (18), rollers (16), pin link plates (20), and standard length pins (26). The base chain also has extended length pins (28). The extended length pins (28) are arranged in pairs of adjacent extended length pins (28), and one article conveying assembly is mounted on one pair of extended length pins (28). The article conveying assembly has a conveyor member (40) and a conveyor member link plate (42). The conveyor member link plate (42) has three spaced holes or openings. Two mounting holes or openings receive parts of the adjacent extended length pins (28) to mount the article conveying assembly on the base chain. The third hole or opening receives part of the conveyor member to mount the conveyor member (40) on the conveyor member link plate (42). Retainers (64) secure the article conveying assembly on the extended length pins (28). The retainers (64) are removable so that a broken or damaged article conveying assembly can be readily removed and replaced without disassembly of the entire chain. The conveyor members (40) are not co-axial with the pins (26,28), but are positioned adjacent to two adjacent pins (28).

## Description

This invention relates to an improved roller conveyor chain, and in particular, to an improved roller conveyor chain that may be used to carry or convey cans.

Roller conveyor chains with one or more article carrying or conveying members are well known in the prior art. Such roller conveyor chains have been useful in conveying cylindrical articles with an open end, such as metal cans, through a curing operation after the can has been painted or has received printing. For example, the cans may be printed with an ink that cures upon exposure to ultraviolet light, and the cans may be carried through an ultraviolet curing oven carried on a roller conveyor chain. Alternatively, freshly painted or otherwise decorated cans may be carried on a roller conveyor chain through drying ovens. Such chain is commonly referred to as oven chain.

Conventional roller chains have pins that extend to pin link plates. The pins extend through bushings that are connected to roller link plates inward of the pin link plates. Rollers are around the bushings.

To use conventional roller chains for conveying articles, such as cans, the prior art has joined article carrying or conveying members to elements of a conventional roller chain. In some designs, some of the pins have been substantially elongated to extend through and out beyond one of the link plates. These elongated pins have been used to carry or convey the cans. The opposite ends of the pins have been mounted with mechanical devices such as cotter pins or spring clips to hold the pin link plate in place. In other designs, detachable article carrying or conveying members have been attached to non-adjacent pins in the roller chain. Generally, in conveying chain of this second design, some of the pins have had extensions or protrusions that extend outward beyond one of the pin link plates, and an article carrying or conveying member has been connected to the protrusion through some coupling mechanism. Frequently, the coupling mechanism has required some press-fit or adhesion of the pin and conveying member to each other or to some intermediate coupling member. Other types of mechanical fasteners have also been used, such as a nut. In a third type of design, hollow pins have been used, and extensions have been inserted through the hollow pins to carry the cans or other articles.

The prior roller conveyor chain designs have been problematic. The article carrying or conveying member may not be adequately retained in service. If the conveying member is adequately retained, it may be difficult or time-consuming to remove if the conveying member becomes broken or damaged. The retaining mechanisms may add excess cost to the product as well. For some designs, removal and replacement of the article carrying or conveying member may require disassembly of the base chain.

The present invention provides an article conveying assembly and a chain conveyor as defined by the attached claims.

The present invention addresses the need for a roller conveyor chain with an article conveying member that is adequately retained in service, and that can be removed and replaced without disassembling the chain.

The present invention will now be described, by way of example only, with reference to the accompanying drawings in which:
FIG. 1 is an elevation of a roller conveyor chain incorporating the principles of the present invention, with part shown in partial cross-section;
FIG. 2 is an end view of the roller conveyor chain of FIG. 1, taken along line 2-2 of FIG. 1, with cans shown in phantom;
FIG. 3 is an elevation of an article conveying assembly for attachment to a base chain;
FIG. 4 is an end view of the article conveying assembly of FIG. 3, taken along line 4-4 of FIG. 3;
FIG. 5 is a cross-section of a portion of a roller conveyor chain with an article conveying assembly mounted on the base chain;
FIG. 6 is an elevation of an extended pin for use in the base chain for mounting the article conveying assembly on the base chain;
FIG. 7 is an elevation of a retainer for use in mounting the article conveying assembly onto the base chain;
FIG. 8 is an elevation of a conveyor member link plate of the article conveying assembly;
FIG. 9 is an exploded view of a portion of a roller conveyor chain with an article conveying assembly;
FIG. 10 is a perspective view of an alternative embodiment of an article conveying assembly aligned with two adjacent pins of a base chain;
FIG. 11 is a perspective view of an alternative embodiment of an article conveying assembly aligned with two adjacent pins of a base chain;
FIG. 12 is a perspective view of an alternative embodiment of an article conveying assembly aligned with two adjacent pins of a base chain; and
FIG. 13 is an elevation of an alternate embodiment of a conveyor member link plate of the article conveying assembly.

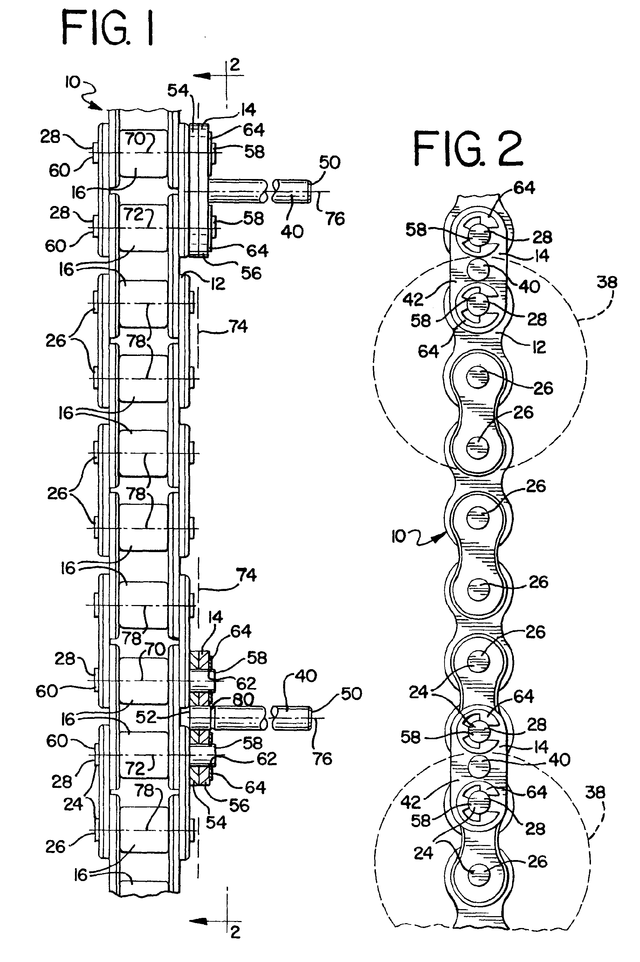

The present invention provides a roller conveyor chain 10 comprising a base chain 12 and a plurality of article conveyor assemblies 14 spaced around the chain. Two article conveying assemblies are shown in the section of chain illustrated in FIGS. 1-2. It should be understood that a complete chain would typically have several spaced article conveying assemblies, and that the base chain would be connected to form a continuous loop.

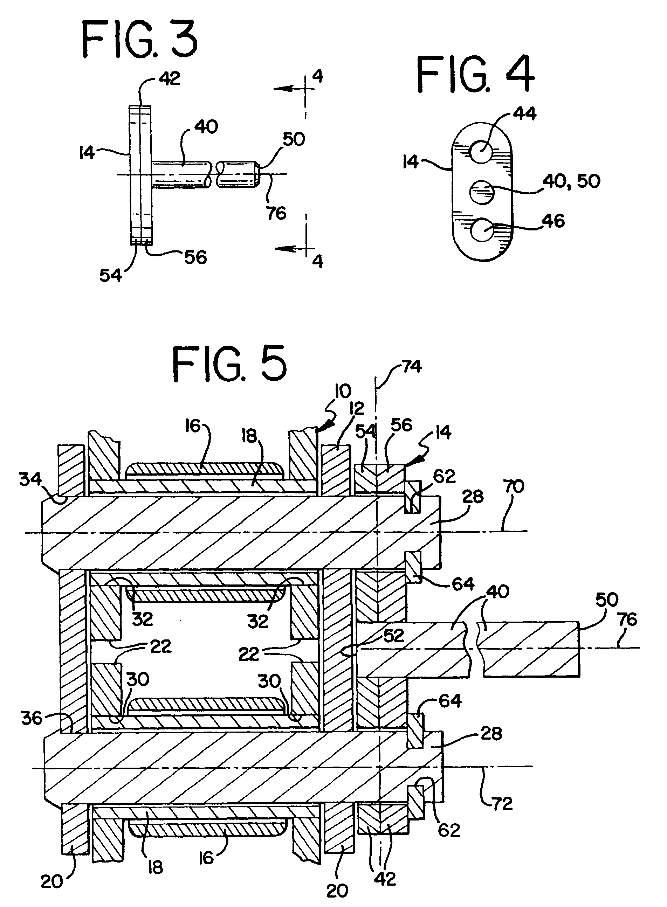

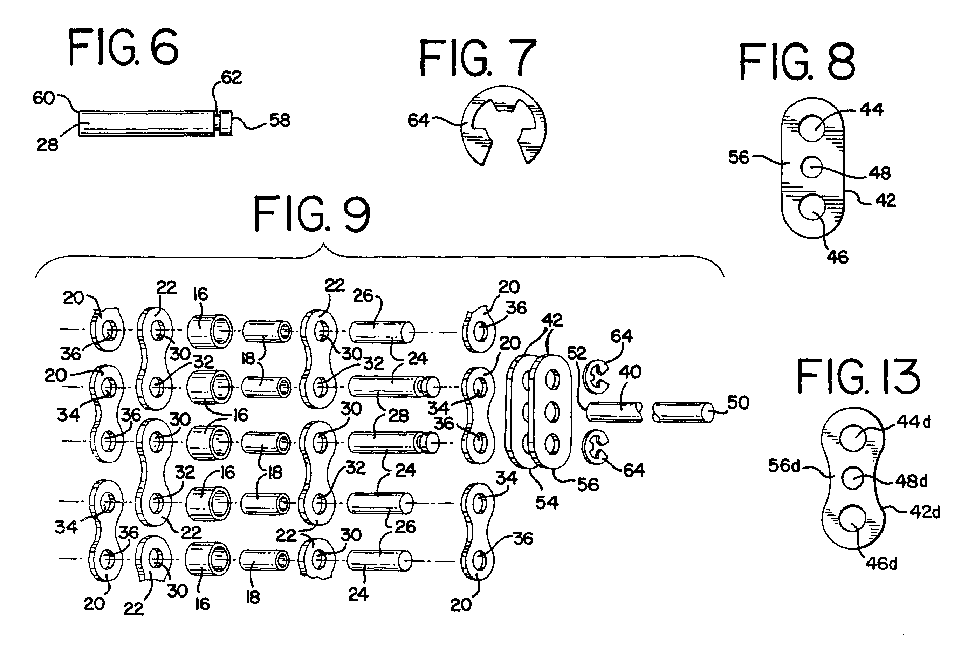

As shown in FIGS. 5 and 9, the illustrated base chain 12 is a roller chain that includes conventional rollers 16, bushings 18, pin link plates 20 and roller link plates 22. The base chain 12 also includes pins 24. The pins 24 include both standard length pins 26 and extended length pins 28.

The base roller chain 12 comprises repeated pairs of spaced pin link plates 20 separated by repeated pairs of spaced roller link plates 22, as is conventional. The spaced roller link plates 22 extend between pairs of adjacent bushings 18. The spaced pin link plates 20 extend between pairs of adjacent pins, and each pin link plate 20 extends from one roller link plate to an adjacent roller link plate. Also as is conventional, the spaced roller link plates 22 have aligned holes 30, 32 that receive bushings 18 in a press fit. The rollers 16 surround the bushings 18 in a conventional manner. The pins 24 extend through the bushings 18.

The pin link plates have holes 34, 36, and the standard length pins 26 are connected to pairs of spaced pin link plates at the spaced holes 34, 36 in a conventional manner, such as by a press fit or by a slip fit with retaining members, such as cotter pins, spring clips and the like. Extended length pins 28 are paired into adjacent pairs and spaced around the chain wherever an article conveying assembly 14 is to be mounted. One pair of the extended length pins 28 may be positioned to extend through the holes 34, 36 of a single pin link plate 20, as shown at the top article conveying assembly 14 of FIGS. 1-2, or one pair of extended length pins 28 may be positioned to extend through the holes 36, 34 of adjacent pin link plates 20, as shown at the bottom article conveying assembly 14 of FIGS. 1-2. One end of each extended length pin 28 is connected to the pin link plate 20 in a conventional manner, such as through a press fit in the holes 34, 36, or through a slip fit with retaining members such as cotter pins and the like. As shown in FIGS. 1-2 and 9, each roller link plate 22 extends between two pin link plates 20 to form the continuous chain.

It should be understood that although one example of a base chain has been illustrated and described, the invention may be used with other forms of base chain, and is not limited to any particular type or structure of base chain unless expressly set forth in the claims.

The roller chain of the present invention is useful in conveying articles such as cans through a processing operation, such as through a drying oven. Cans are shown in phantom in FIG. 2 at 38. The article conveying assemblies 14 serve to support the articles such as the illustrated cans for transport with movement of the roller chain.

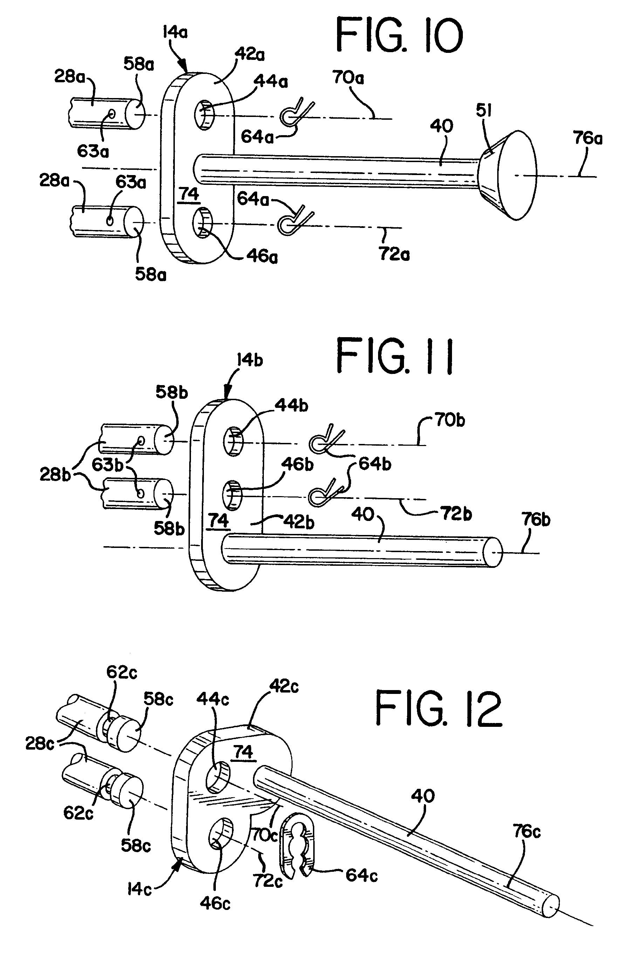

As shown in FIGS. 1-5 and 9, each article conveyor assembly 14 of the first embodiment includes a conveyor member 40 and a conveyor member link plate 42. The embodiments illustrated in FIGS. 10-12 also include a conveyor member 40 and a conveyor member link plate 42a-c. Another embodiment of a conveyor member link plate is shown in FIG. 13 at 42d. As shown in FIG. 9, each conveyor member link plate 42 in the first illustrated embodiment has three spaced holes or openings: two end mounting holes or openings 44, 46 and a center conveyor hole or opening 48. Part of each conveyor member 40 is received in the conveyor hole 48 of one conveyor member link plate 42. In the first illustrated embodiment, one end mounting opening 44 receives part of one of the adjacent extended length pins 28 and the other end mounting opening 46 receives part of the other adjacent extended length pin 28 to mount the article conveyor assembly 14 on the base chain 12. As described below with reference to the embodiments of FIGS. 11 and 12, it should be understood that the conveyor hole or opening 48 need not be centered on the conveyor member link plate 42, and that the mounting holes or openings 44, 46 need not be at the ends of the conveyor member link plate 42.

The conveyor member 40 may comprise a rod, as illustrated, with a free end 50 and an opposite end 52. In the illustrated embodiment, part of the conveyor member 40 at the opposite end 52 is secured in the center conveyor hole or opening 48 of the conveyor member link plate 42 through a press fit, but it should be understood that other forms of connection may be used, such as a slip fit with a retaining member. The conveyor member 40 could be secured to the conveyor member link plate 42 through use of an adhesive or through welding. Mechanical fasteners such as screws could be used to secure the elements 40, 42 of the assembly 14 together. The conveyor member 40 could be received in a hole or opening that does not extend through the entire thickness of the conveyor member link plate 42. Alternatively, the conveyor member 40 and conveyor member link plate 42 could comprise an integral structure. Any of these options may be used as a means for securing the conveyor member 40 to the conveyor member link plate 42 at a position spaced from the two mounting openings 44, 46 for receiving parts of two adjacent extended length pins 28.

The free end 50 of the conveyor member 40 is spaced furthest from the base chain 12. The conveyor member 40 may have any conventional structure: it may have a solid or hollow shaft, with a spring-cushioned member, knob or cap at the free end 50; standard tips and extensions may be used. An example of a cushion member or tip is shown at 51 in FIG. 10. The conveyor member may include a sleeve that is placed over a base rod. Instead of a rod or shaft, the conveyor member 40 could comprise a hook, a mandrel, a tray or a pan. The conveyor member 40 may have any standard length for the intended application, such as an exposed length beyond the conveyor member link plate 42 of about 7 inches (178mm) and a thickness of about a quarter inch(6mm) or less, exclusive of any tip or extension. It should be understood that the illustrated conveyor members and the above noted dimensions and shapes are provided by way of example only, and that the invention is not limited to these dimensions and shapes.

As shown in Figs. 3, 5 and 9, each of the conveyor member link plates 42 in the first illustrated embodiment includes an inward piece 54 and an outward piece 56. In the first illustrated embodiment, each piece 54, 56 of the link plate 42 has a thickness of 0.094 inches (2.4mm), giving the entire link plate 42 a thickness of 0.188 inches (4.8mm). Each piece 54, 56 of the illustrated conveying member link plate 42 has about the same thickness as the other link plates 20, 22. The two-piece link plane 42 provides extra thickness to strengthen the junction of the conveying member 40 and the conveying member link plate 42. It should be understood that other structures could be used for the link plate 42, such as a single-ply plate of greater thickness than the other link plates 20, 22, as illustrated in the embodiment of FIG. 10, where the mounting holes are shown at 44a and 46a, the single ply conveyor member link plate at 42a, the extended length pins at 28a, and reference number 14a is used for the conveying assembly. Single ply conveyor member link plates are also shown in FIGS. 11-12 at 42b and 42c.

It should also be understood that the conveyor member link plates 42 may have shapes other than the illustrated shapes, and that the holes or openings 44, 46 and 48 could be positioned other than as illustrated in the first embodiment. For example, as shown in the embodiment of FIG. 11, it may be desirable to shape the conveyor member link plates 42 so that two adjacent extended length pins 28b may be received in adjacent mounting holes 44b, 46b in the conveyor member link plate 42b, with the conveyor member 40 extending out from a conveyor opening at an end of the conveyor member link plate 42b adjacent to one of the mounting holes 46b to form the conveying assembly 14b. Thus, as shown in FIG. 11, the central longitudinal axes 70b of the two adjacent extended length pins 28b will be adjacent to each other and the central longitudinal axis 76b of the conveyor member 40 will be adjacent to the central longitudinal axis of one of the adjacent pins when assembled. As shown in the embodiment of FIG. 12, there may be two adjacent mounting holes 44c, 46c in the conveyor member link plate 42c to receive extended length pins 28c, with the conveyor member 40 extending out from a conveyor opening at another location, offset from the adjacent mounting holes 44c, 46c, to form the conveying assembly 14c. Thus, as shown in FIG. 12, the central longitudinal axes 70c of the two adjacent extended length pins 28c will be adjacent to each other and the central longitudinal axis 76c of the conveyor member 40 will be offset from the central longitudinal axes of the adjacent pins when assembled. As shown in the embodiment of FIG. 13, the conveyor member link plate 42d may be shaped like the pin link plates 20 and roller link plates 22, curving inward from the mounting holes 44d, 46d toward the central conveyor hole 48d. The embodiment of FIG. 13 may have an inward piece (not shown) and an outward piece 56d, or could comprise a thicker, single layer, as in the embodiments of FIGS. 10-12. In the embodiments of FIGS. 3-4, 10 and 13, when the article conveying assemblies 14, 14a are assembled onto the base chain 12, the central longitudinal axis 76, 76a of the conveying member 40 lies between the central longitudinal axes 70, 70a of the two adjacent pins 28, 28a.

The base roller chain 12 may be standard pin oven chain or RING LEADER O-Ring Pin Oven Chain available from the Diamond Chain Company of Indianapolis, Indiana, using extended length pins 28 instead of the standard "through pin" design of these commercial products. The base chain may be, for example, a standard ¾ inch (19mm) pitch ANSI chain or industrial RING LEADER O-ring chain available from Diamond Chain, using spaced pairs of extended pins 28 and standard pins 26. Heat treated components may be preferred. If the conveyor chain is to be used in high temperature environments in, for example, drying ovens, it is preferred to incorporate some additional clearances in the base chain to accommodate the high temperatures and allow more access for lubricant to enter the joints between the bushings and pins. It should be understood that these chain products are identified for purposes of illustration only, and that the invention is not limited to these roller chain products.

As shown in FIGS. 1, 5 and 9, the extended length pins 28 have protruding outward ends 58 and inward ends 60. The inward ends 60 are received in the holes 34, 36 of the pin link plates 20 in a conventional manner, such as through a press fit, through a slip fit with a retainer, or through any other conventional connection. The extended length pins extend through the holes 30, 32 of the roller link plates 22 and outward beyond the roller link plates 22, through the holes 34, 36 of the pin link plates 20 and beyond the pin link plates 20. The extended length pins 28a-28c of the other embodiments also have protruding ends 58a-c, and also have inward ends that are connected to pin link plates in a conventional manner.

When the article carrying assemblies 14, 14a-c are mounted on the extended length pins 28, 28a-c the extended length pins 28, 28a-c extend through the mounting holes 44, 44 a-c, 46, 46a-c of the conveyor member link plates 42, 42a-c to the outward ends 58, 58a-c that extend beyond the conveyor member link plates. The extended length pins 28, 28a-c are longer than the standard length pins 26; for a ¾ inch(19mm) pitch chain, the standard length pins 26 may have a length of 0.995 inches (25.3mm) for example, and the extended length pins 28, 28a-c may have a length of 1.299 inches (33.0mm) for example. The diameters of the extended length pins 28, 28a-c are smaller than the diameters of the holes or openings 30, 32, 34, 36, 44, 44a-c, 46, 46a-c of the link plates 20, 22, 42 to provide a slip fit. It should be understood that these dimensions are provided by way of example only, and that the invention is not limited to any particular dimension unless expressly set forth in the claims.

In the first illustrated embodiment, each extended length pin 28 has a recess 62 around its circumference near the outward end 58. In that embodiment, the recess comprises a groove. To secure the article conveying assemblies 14 on the extended length pins 28, retainers 64 are used. In the first illustrated embodiment, each retainer comprises an e-shaped thin metal member, shown in FIGS. 7 and 9. One retainer 64 is slipped onto the outward end 58 of each extended length pin 28 to fit within the groove 62 of each pin 28. Thus, as shown in FIG. 5, the conveyor member link plate 42 is restrained between the retainer 64 and the nearest pin link plate 20. The retainers 64 may comprise commercially available snap rings, e-clips or similar structures, such as retaining rings sold by Waldes Truarc/ Industrial Retaining Ring Company of Millburn, New Jersey (or Waldes Truarc Inc. of Somerset, New Jersey). It should be understood that other retainers could be used as well, such as cotter pins, shown at 64a-b in FIGS. 10-11, or spring clips, shown at 64c in FIG. 12. All of these retainers are removable, and all of them would allow for each article conveying assembly 14 to be detached individually from the base chain 12 without requiring disassembly of the base chain 12. It should also be understood that the extended length pins 28 would have complementary structures, such as through holes, shown at 63a-b in FIGS. 10-11, if cotter pins are to be used instead of the illustrated grooves 62.

In the following description of the assembly of the conveyor chain and article conveying assemblies, assembly of the first embodiment will be described. It should be understood that assembly of the conveying assemblies 14a-c of the embodiments of FIGS. 10-13 is similar and would follow the same general steps. Differences in the assembly of the different embodiments are set forth.

To assemble the conveyor chain 10 of the present invention, the base chain 12 and the article conveying assemblies 14 may be separately assembled and then assembled into the complete conveyor chain 10. In assembling the base chain 12, consideration should be given to the desired spacing for the articles to be conveyed and the sizes of the articles. With the desired spacing known, the positions for the article conveying assemblies 14 can be determined. With the positions of the article conveying assemblies 14 known, the necessary positions for the extended length pins 28 can be determined. The extended length pins 28 may be used at these positions and the standard length pins 26 may be used at positions between the pairs of extended length pins 28. The base chain may then be assembled in a conventional manner, except that one end of each extended length pin 28 will not yet be secured to the link plate 20. It should be understood that the base chain could alternatively be assembled with all or a substantial number of pins 24 being extended length pins 28, with some form of retainer or mechanical connection to mount them to the pin link plates, and with none or few standard length pins.

To assemble each article conveying assembly 14, a conveyor member 40 with a desired structure is selected, and one end 52 of the conveyor member 40 is then secured to the conveyor member link plate 42. As discussed above, the conveyor member 40 may be secured to the conveyor member link plate 42 by press-fitting one end 52 of the conveyor member 40 in the conveyor hole or opening 48 of the conveyor member link plate 42, or through some other means.

Each assembled article conveying assembly 14 is then mounted to the base chain 12. Each conveyor member link plate 42 is mounted on a pair of adjacent extended length pins 28 by placing the outward ends 58 of the extended length pins 28 in the mounting holes or openings 44, 46 of the conveyor member link plate 42 and sliding the conveyor member link plate 42 axially along the extended length pins 28 to the nearest pin link plate 20. Since the mounting holes or openings 44, 46 of the conveyor member link plates 42 have diameters larger than the diameters of the extended length pins 28, the conveyor member link plate 42 may be readily slip fit onto the pair of adjacent extended length pins 28. Retainers 64 may then be slipped into the grooves 62 on the extended length pins 28 outward of the conveyor member link plate 42 to removably secure the article conveying assembly 14 to the base chain. If other types of retainers are used, such as cotter pins 64a-b or spring clips 64c as in the embodiments of FIGS. 10-12, the conveying assembly 14a-c may be secured to the base chain in the appropriate manner, such as by slipping cotter pins 64a-b through holes 63a-b near the end of the extended length pins 28a-b, for example, or by slipping a spring clip 64c around both extended length pins 28c and snapping the spring clip into the grooves 62c of both pins 28c.

Additional article conveying assemblies 14 are then attached to the base chain 12 in the same manner. The assembled roller conveyor chain 10 may have any appropriate number and spacing of article conveying assemblies 14. As shown in FIGS. 1-2 at the top article conveying assembly 14, the adjacent pair of extended length pins 28 may extend through a single set of aligned pin ink plates 20, or as shown in FIGS. 1-2 at the bottom article conveying assembly 14, the adjacent pair of extended length pins 28 may extend through adjacent sets of pin link plates 20. The article conveying assemblies 14 may be attached to the base chain 12 with all of the conveying members 40 extending outward from the same side of the base chain, as shown in FIG. 1. Alternatively, it may be desirable to mount some of the article conveying assemblies 14 on the opposite side of the base chain 12 so that different conveyor members 40 extend out from different sides of the base chain 12.

Should one of the conveyor members 40 become broken, bent or worn so that it must be replaced, the present invention allows for removal and replacement without disassembly of the base chain 12. The retainers 64 holding the article conveying assembly 14 with the broken, damaged or worn conveyor member may then be removed, so that this article conveying assembly 14 may be removed as a unit by slipping the assembly off of the extended length pins 28. A new article conveyor assembly may then be slip fit onto the same pair of extended length pins 28 and retainers 64 positioned to restrain the new assembly in position on the extended length pins. Thus, with minimal effort and minimal down-time, the conveyor chain 10 may be repaired and ready for reuse. The same general procedure may be used for the other embodiments of FIGS. 10-13.

As can be seen from FIGS. 1-2, 5 and 9, when the article conveying assemblies 14 are mounted on the extended length pins 28 of the base chain 12, the conveyor member 40 is not co-axial with the extended length pins 28. Instead, as shown in FIG. 5, the central longitudinal axes 70, 72 of the adjacent extended length pins 28 intersect a plane 74 through the conveyor member link plate 42 at locations spaced from the intersection of the central longitudinal axis 76 of the conveyor member 40 and the plane 74. In the first illustrated embodiment, the central longitudinal axes 70, 72, 76 of the extended length pins 28 and conveyor member 40 are parallel to the central longitudinal axis 78 of the standard length pins 26, as shown in FIG. 1. However, it should be understood that the conveyor member 40 could instead be canted to be other than perpendicular to the plane 74.

Similarly, as shown in the embodiments of FIGS. 10-12, the conveyor members 40 are not co-axial with the extended length pins 28a-c. Instead, the central longitudinal axes 70a-c, 72a-c of the adjacent extended length pins 28a-c intersect the planes 74 of the surfaces of the conveyor member link plates 42a-c at locations spaced from the intersections of the central longitudinal axes 76a-c of the conveyor members 40 and the planes 74. A roller conveyor using the conveyor member link plate 42d of the FIG. 13 embodiment would have a similar construction.

The conveyor members 40 of the present invention should be adequately retained in service by the combination of the retainers 64 or 64a-c and complementary structures 62, 63a-b in the extended length pins 28 or 28a-c. It should be understood that each of the illustrated connecting means are identified for purposes of illustration only, and that the invention is not limited to any of these connecting means unless expressly called for in the claims.

The conveyor members 40 and conveyor member link plates 42 and 42a-c may be made of a wide variety of materials selected primarily to withstand the processing environment, such as the temperatures encountered in a drying oven or ultraviolet light encountered in an ultraviolet light curing operation. The conveyor members 40 may be made of through-hardened medium carbon steel than is bendable, for example. The conveyor members 40 may be heat treated to produce a ductile structure capable of withstanding incidental contact with jammed articles or interference with machine framework. If the obstacle is minor and the conveyor member 40 becomes bent, it can be straightened back to the original position. The conveyor members 40 may alternatively be intentionally made brittle and fracturable as by using carburized steel, case-hardened low carbon steel or a ceramic material so as to be breakable should blockage or unusually large forces be encountered. Stainless steel could also be used for the conveyor members 40. Alternatively or additionally, the conveyor members 40 may be scored as shown at 80 in FIG. 1 at the bottom article conveying assembly 14, so that the conveyor member 40 will break away along the score line 80 if blockage or unusually large forces are encountered. Other materials may also be used for the length of the conveyor members, such as plastic or other material suitable to the application. If a tip or extension is used, the tip or extension may be made of the same or different material as the remainder of the length of the conveyor member.

The extended length pins 28 and 28a-c may be made of the same material as the standard length pins 26. The materials may be standard ones used for the particular environment.

Although the invention has been described and shown with a single strand chain, the invention may also be applied to other types of roller chain. For example, article conveying assemblies 14, 14a-c of the types shown and described could also be attached to a multiple strand chain. Article conveying assemblies could also be attached to lubricated or O-ring chain. It might also be desirable to attach article conveying assemblies to flat top chain and to roller chain with attachments.

While only specific embodiments of the invention have been described and shown, it is apparent that various alternatives and modifications can be made thereto. Those skilled in the art will also recognize that certain additions can be made to the illustrative embodiments. It is, therefore, the intention in the appended claims to cover all such alternatives, modifications and additions as may fall within the scope of the invention.

## Claims

1. An article conveying assembly for mounting to a pair of adjacent pins protruding from a chain, said article conveying assembly comprising:
a conveyor member (40); and
a conveyor member link plate (42) having a plurality of openings, one opening for receiving part of one of said two adjacent pins (28) and one opening for receiving part of the other of said adjacent pins (28);
said conveyor member (40) extending out from said conveyor member link plate (42) at a position spaced from said two openings for receiving said parts of said two adjacent pins (28).

2. The article conveying assembly of claim 1 wherein said conveyor member link plate (42) is a two piece plate.

3. The article conveying assembly of claim 1 wherein said conveyor member link plate (42) is a one-piece plate.

4. The article conveying assembly of any preceding claim wherein said conveyor member link plate (42) includes a third opening spaced from the other two openings in the conveyor member link plate (42), a part of said conveyor member (40) being received in said third opening.

5. The article conveying assembly of claim 4 wherein said third opening is positioned between two other openings in the conveyor member link plate (42).

6. The article conveying assembly of claim 4 wherein said two openings for receiving parts of said adjacent pins (28) are adjacent to each other and said third opening is adjacent to one of said two openings.

7. The article conveying assembly of claim 4 wherein said two openings for receiving parts of said adjacent pins (28) are adjacent to each other and said third opening is offset from said two openings.

8. A chain conveyor having:
pins and pin link plates, said pins extending between pin link plates;
wherein at least two pins (28) are adjacent to each other and have central longitudinal axes (70,72);
an article conveying assembly including a conveyor member (40) and a conveyor member link plate (42),
said conveyor member link plate (42) being mounted on said adjacent pins (28) and said conveyor member (40) extending outwardly from said conveyor member link plate (42);
said conveyor member link plate (42) having a plane intersected by the central longitudinal axes (70,72) of the two adjacent pins (28) to which said conveyor member link plate is mounted;
said conveyor member (40) having a central longitudinal axis (76) intersecting said plane of said conveyor member link plate (42) at a position spaced from the intersections of said central longitudinal axes (70,72) of said two adjacent pins (28) with said plane of said conveyor member link plate (42).

9. The chain conveyor of claim 8 wherein said conveyor member central longitudinal axis (76) lies between the central longitudinal axes (70,72) of the two adjacent pins (28) .

10. The chain conveyor of claim 8 wherein said central longitudinal axes (70,72) of the two adjacent pins (28) are adjacent to each other and said conveyor member central longitudinal axis (76) is adjacent to the central longitudinal axis of one of the adjacent pins (28) .

11. The chain conveyor of claim 8 wherein said central longitudinal axes (70,72) of the two adjacent pins (28) are adjacent to each other and said conveyor member central longitudinal axis (76) is offset from the central longitudinal axes (70,72) of the adjacent pins (28) .

12. The chain conveyor of any of claims 8-11 wherein said conveyor member link plate (42) comprises an inward piece (54) and an outward piece (56).

13. The chain conveyor of any of claims 8-11 wherein said conveyor member link plate (42) comprises a one-piece plate.

14. The chain conveyor of any of claims 8-13 wherein said conveyor member (40) comprises a rod having an outward free end.

15. The chain conveyor of any of claims 8-14 wherein at least a part of the conveyor member link plate (42) is juxtaposed with a part of the pin link plate.

16. The chain conveyor of any of claims 8-15 wherein said conveyor member link plate (42) has three spaced openings and said two adjacent pins (28) extend outward beyond at least one pin link plate, at least a part of each pin (28) being received in one of the conveyor member link plate openings and at least part of said conveyor member (40) being received in said third opening.

17. The chain conveyor of any of claims 8-16 further comprising a pair of removable retainers (64) to removably secure said conveyor member link plate (42) to said two adjacent pins (28).

18. The chain conveyor of any of claims 8-17 wherein said conveyor member (40) is press fit in said third opening of said conveyor member link plate (42) and said pins (28) are slip fit in the other openings of the conveyor member link plate.

19. The chain conveyor of any of claims 8-18 including a plurality of conveyor members (40) and a plurality of conveyor member link plates (42).

20. A roller conveyor chain comprising:
a plurality of pins (26,28) having substantially parallel central longitudinal axes, some of said pins (26) having one length and some of said pins (26,28) comprising extended length pins (28) having greater lengths;
bushings (18) around the pins (26,28);
rollers (16) around the bushings (18);
roller link plates (22) extending between pairs of adjacent bushings (18) ;
pin link plates (20) extending between pairs of adjacent pins (26,28), each pin link plate (20) extending from one roller link plate (22) to an adjacent roller link plate (22) ;
wherein at least one pair of adjacent pins (28) comprise extended length pins;
a conveyor member (40) having a central longitudinal axis (76) ;
a conveyor member link plate (42) having two mounting openings and a third conveyor opening, part of one of said adjacent extended length pins (28) being received in one of said mounting openings of said conveyor member link plate (42) and part of the other of said adjacent extended length pins (28) being received in the other of said mounting openings of said conveyor member link plate (42);
part of said conveyor member (40) being received in said third conveyor opening in said conveyor member link plate (42);
said conveyor member central longitudinal axis (76) intersecting said conveyor member link plate (42) at a position spaced from central longitudinal axes (70,72) of said extended length pins received in said two mounting openings in said conveyor member link plate.

21. The roller conveyor chain of claim 20 wherein said conveyor opening lies between said mounting openings.

22. The roller conveyor chain of claim 20 wherein said mounting openings are adjacent to each other and said conveyor opening is adjacent to one of said mounting openings.

23. the roller conveyor chain of claim 20 wherein said mounting openings are adjacent to each other and said conveyor opening is offset from said mounting openings.
